# DEMANDE DE BREVET EUROPEEN

(11) **EP 4 206 917 A1**
(43) Date de publication de la demande: **05.07.2023**
(21) Numéro de dépôt: 22216966.6
(22) Date de dépôt: 28.12.2022
(51) Int. Cl.: G06F 9/455, H04L 12/46, H04L 9/40

(54) **PROCÉDÉ ET SYSTÈME D'ACCÈS ENCADRÉ D'AU MOINS UN OPÉRATEUR EXTERNE À UN ENSEMBLE D'OPÉRATIONS D'UNE INFRASTRUCTURE DE CALCUL**

(30) Priorité: 29.12.2021 FR 2114605
(71) Demandeur: THALES, 92400 Courbevoie (FR)
(72) Inventeur: JAOUEN, Laurent, 35136 SAINT JACQUES DE LA LANDE (FR); KSINANT, Wladimir, 75008 PARIS (FR)
(74) Mandataire: Lavoix

(57) **Abrégé**

L'invention concerne un procédé et un système d'accès encadré d'au moins un opérateur externe à un ensemble d'opérations fournies par une infrastructure de calcul distante à un client, via un réseau de communications. Le système d'accès est opéré par un opérateur de confiance, différent dudit opérateur externe. Ce procédé comprend la réception (40) d'une requête dudit opérateur de confiance de mise en place d'une session informatique partagée avec l'opérateur externe, l'instanciation (44) d'un serveur et d'un service de terminal de connexion à distance audit serveur, la génération (46) d'une passerelle d'accès audit service de terminal et la fourniture (48-56) d'accès audit service de terminal, via ladite passerelle d'accès, à l'opérateur de confiance et à l'opérateur externe. Suite à une réception (58) d'une requête d'arrêt de ladite session informatique partagée, l'opérateur de confiance et l'opérateur externe sont déconnectés (60) et le service de terminal sur le serveur est arrêté (64).

## Description

La présente invention concerne un procédé et un système d'accès encadré d'au moins un opérateur externe à un ensemble d'opérations fournies par une infrastructure de calcul distante à un client, via un réseau de communications. Elle concerne également programme d'ordinateur associé.

L'invention se situe dans le domaine de la sécurité des systèmes informatiques, et plus particulièrement de la sécurisation des opérations et services fournis par des infrastructures de systèmes informatiques.

La fourniture d'infrastructure de dispositifs de calcul et de stockage de données distants est largement développée, connue généralement sous le nom de « cloud computing ». De manière classique, une telle infrastructure est fournie par un fournisseur de services, les dispositifs de calcul étant gérés par le fournisseur de services. Un client, par exemple une entreprise, obtient une quantité de stockage de données et/ou une capacité de calcul, accessibles via un réseau de communication (e.g. Internet).

Dans ce contexte, se posent des problèmes accrus de sécurité des données et de risque d'accès sans autorisation, potentiellement malveillant, aux données ou aux opérations du client.

L'invention se situe dans ce contexte technologique de sécurisation des opérations et services fourni par le cloud computing, pour créer une infrastructure de confiance (ou « trusted cloud »). La notion de confiance est liée à la garantie d'un niveau de sécurité offert par un système informatique.

En particulier dans le domaine des calculs distribués (« cloud computing »), une des problématiques qui peut se poser est la nécessité d'accéder à des opérations ou services opérés pour un client pour apporter un support, une résolution de problèmes rencontrés (support informatique, debugg, etc).

De manière classique, un opérateur ayant des droits d'accès d'un niveau supérieur aux droits d'accès d'un utilisateur, en général appelé niveau « administrateur », se connecte à un système informatique dédié à un client pour de telles opérations de support.

Dans un environnement de confiance, d'un niveau de sécurité élevé, par exemple de niveau SecNumCloud selon la classification de l'ANSSI (« Agence nationale de la sécurité des systèmes d'information ») qui définit la sécurité des systèmes informatiques en France, un tel système d'accès n'est pas suffisant.

Pour fournir un accès sécurisé à divers opérateurs pour effectuer des actions de support dans un système informatique dédié à un client, il est connu de mettre en place un « bastion » informatique visant à protéger le système informatique dédié au client des menaces extérieures, l'accès à un tel bastion étant soumis à une barrière d'authentification forte. Cependant, si un tiers malveillant parvient à récupérer les informations nécessaires pour passer une telle barrière d'authentification, ce tiers a un accès complet et non surveillé au système.

L'invention a pour but de remédier aux inconvénients de l'état de la technique précités.

A cet effet, l'invention propose, selon un aspect, un procédé d'accès encadré d'au moins un opérateur externe à un ensemble d'opérations fournies par une infrastructure de calcul distante à un client, via un réseau de communications. Ce procédé est mis en oeuvre par au moins un processeur de calcul d'un système d'accès encadré opéré par un opérateur de confiance, différent dudit opérateur externe, l'opérateur de confiance ayant un niveau de droits d'accès supérieur au niveau de droits d'accès dudit opérateur externe, et comprend des étapes de :
- réception d'une requête dudit opérateur de confiance de mise en place d'une session informatique partagée avec l'opérateur externe,
- instanciation d'un serveur exécutant un système d'exploitation, implémentant un service de terminal de connexion à distance audit serveur, ledit serveur étant configuré pour accéder audit ensemble d'opérations fournies par ladite infrastructure de calcul distante audit client,
- génération d'une passerelle d'accès audit service de terminal,
- fourniture d'accès audit service de terminal, via ladite passerelle d'accès, à l'opérateur de confiance et à l'opérateur externe ;
- suite à une réception d'une requête d'arrêt de ladite session informatique partagée en provenance dudit opérateur de confiance, déconnexion dudit opérateur de confiance et dudit opérateur externe du service de terminal, et
- arrêt de l'exécution du service de terminal sur ledit serveur.

Avantageusement, le procédé d'accès encadré fournit une session informatique partagée dont l'accès est accordé d'une part à l'opérateur de confiance et d'autre part à au moins un opérateur externe, ce qui permet à l'opérateur de confiance de contrôler les actions de l'opérateur externe.

Avantageusement, la mise à disposition d'un service de terminal de connexion au serveur distant est éphémère en ce sens qu'elle n'est fournie que durant une session. Ainsi, avantageusement, la sécurité est augmentée.

Le procédé d'accès encadré selon l'invention peut également présenter une ou plusieurs des caractéristiques ci-dessous, prises indépendamment ou selon toutes les combinaisons techniquement envisageables :
L'étape de fourniture d'accès audit service de terminal comporte la transmission d'une adresse de connexion à l'opérateur de confiance.

Le procédé comporte, suite à la réception d'une requête dudit opérateur de confiance de mise en place d'une session informatique partagée, une étape d'authentification dudit opérateur de confiance et d'autorisation d'accès suite à ladite authentification.

La fourniture d'accès audit service de terminal comporte une authentification de l'opérateur externe, la fourniture d'accès audit opérateur externe étant conditionnée à la réussite de l'authentification.

Le procédé comporte en outre, suite à la réception de la requête d'arrêt de ladite session informatique partagée, un archivage de l'ensemble des actions effectuées par l'opérateur externe et l'opérateur de confiance durant ladite session.

A l'étape d'instanciation, le système d'exploitation exécuté par ledit serveur est un système d'exploitation non modifiable.

Selon un autre aspect, l'invention concerne un système d'accès encadré d'au moins un opérateur externe à un ensemble d'opérations fournies par une infrastructure de calcul distante à un client, via un réseau de communications, le système d'accès encadré étant opéré par un opérateur de confiance, différent dudit opérateur externe, l'opérateur de confiance ayant un niveau de droits d'accès supérieur au niveau de droits d'accès dudit opérateur externe. Le système comprend au moins un processeur configuré mettre en oeuvre des modules de:
- réception d'une requête dudit opérateur de confiance de mise en place d'une session informatique partagée avec l'opérateur externe,
- instanciation d'un serveur exécutant un système d'exploitation, implémentant un service de terminal de connexion à distance audit serveur, ledit serveur étant configuré pour accéder audit ensemble d'opérations fournies par ladite infrastructure de calcul distante audit client,
- génération d'une passerelle d'accès audit service de terminal,
- fourniture d'accès audit service de terminal, via ladite passerelle d'accès, à l'opérateur de confiance et à l'opérateur externe ;
- suite à une réception d'une requête d'arrêt de ladite session informatique partagée en provenance dudit opérateur de confiance, déconnexion dudit opérateur de confiance et dudit opérateur externe du service de terminal, et
- arrêt de l'exécution du service de terminal sur ledit serveur.

Selon un mode de réalisation, le système comporte en outre un module d'authentification, configuré pour authentifier ledit opérateur de confiance et/ou ledit au moins un opérateur externe.

Selon un mode de réalisation, le système comporte en outre des modules de connexion sécurisés par réseau virtuel privé, pour la connexion de l'opérateur de confiance et pour la connexion dudit au moins un opérateur externe.

Le système d'accès encadré est configuré pour mettre en oeuvre le procédé d'accès encadré brièvement décrit ci-dessus, dans toutes ses variantes de mise en oeuvre.

Selon un autre aspect, l'invention concerne un support d'enregistrement d'informations, sur lequel sont mémorisées des instructions logicielles pour l'exécution d'un procédé d'accès encadré tel que brièvement décrit ci-dessus, lorsque ces instructions sont exécutées par un dispositif électronique programmable.

Selon un autre aspect, l'invention concerne un programme d'ordinateur comportant des instructions logicielles qui, lorsqu'elles sont exécutées par un dispositif électronique programmable, mettent en oeuvre un procédé d'accès encadré tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :
la figure 1 est une représentation schématique d'un système d'accès encadré selon un mode de réalisation ;
la figure 2 est un schéma-bloc représentatif d'un dispositif électronique programmable adapté pour exécuter un procédé d'accès encadré selon un mode de réalisation ;
la figure 3 est un organigramme des principales étapes d'un procédé d'accès encadré selon un mode de réalisation.

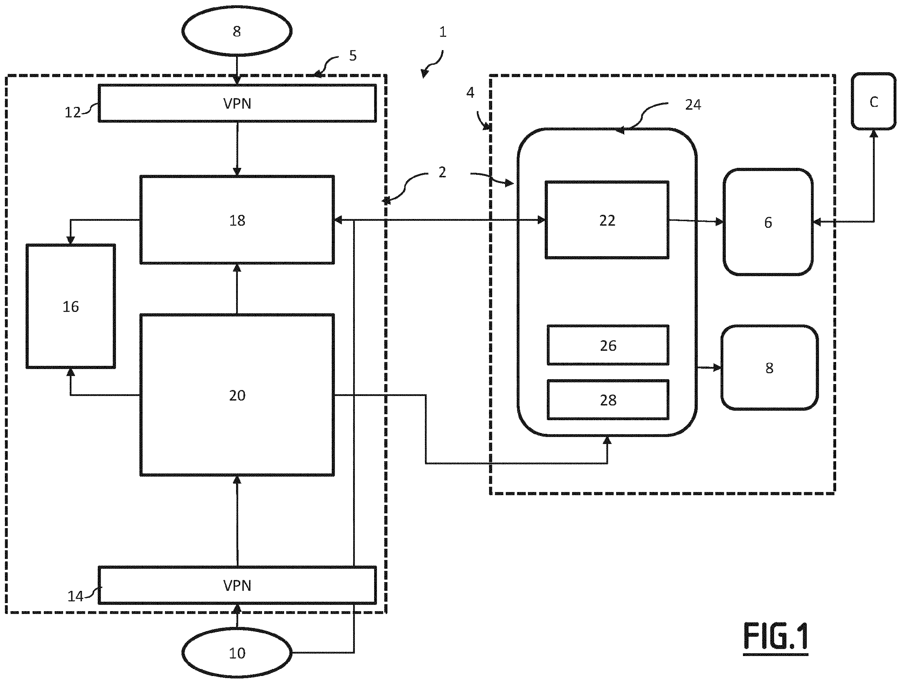

La figure 1 illustre schématiquement un système global 1 d'accès/partage et modifications d'opérations fournies par une infrastructure de calcul distante, comportant un système 2 d'accès encadré selon un mode de réalisation de l'invention.

Le système 1 est représenté dans une partition en deux zones logiques, respectivement une zone dite de production 4 et une zone d'administration 5.

Dans une variante, la zone de production 4 et la zone d'administration 5 sont également séparées physiquement, afin de renforcer la sécurité.

Le système 2 d'accès encadré comprend la zone d'administration 5 et une partie de la zone de production 4.

Ce système d'accès encadré 2 a pour but de fournir un accès encadré et sécurisé à un ensemble d'opérations fournies par une infrastructure de calcul distante à un client C, via un réseau de communications, par exemple Internet.

On entend par ensemble d'opérations fournies une ou plusieurs opération(s) ou service(s) fournies par l'infrastructure de calcul au client.

Par exemple, l'ensemble d'opérations est exécuté par une machine virtuelle (ou VM) du client 6, qui s'exécute dans la zone de production 4.

Le système 2 d'accès encadré permet un accès d'au moins un opérateur externe 8 ainsi que d'un opérateur de confiance 10 pour effectuer une intervention (e.g. corrections, debugging...) sur la VM 6.

Le terme opérateur désigne à la fois une personne physique (par exemple employé d'une entreprise) ou un logiciel auquel est associé un compte de service qui permet de l'authentifier de façon unique.

L'opérateur de confiance 10 est différent de l'opérateur externe 8, l'opérateur de confiance ayant un niveau de droits d'accès (ou niveau de privilège) supérieur au niveau de droits d'accès de l'opérateur externe 8.

Dans un scénario d'application pratique, l'opérateur de confiance 10 est un opérateur « tiers de confiance » et l'opérateur externe 8 est par exemple le fournisseur de l'infrastructure de calcul distante sur laquelle est opérée la machine virtuelle du client.

Chacun des opérateurs 8, 10 est apte à se connecter à la zone d'administration 5, de préférence via un réseau virtuel privé (ou VPN) 12, 14, permettant de réaliser des connexions sécurisées, privées et chiffrées de bout en bout.

Le système 1 comprend, dans la zone d'administration 5, un module 16 d'authentification, un module 18 de gestion de session informatique partagée et un module 20 mettant en oeuvre une passerelle d'accès à un service de terminal distant 22 de connexion à un serveur 24 dans la zone de production 4.

Le module 18 de gestion de sessions informatique partagé est adapté à coopérer avec les modules 16 et 20 pour mettre en oeuvre un procédé d'accès encadré tel que décrit plus en détail ci-après.

Le service terminal distant 22 fournit, en d'autres termes, un « bureau » distant, au sens informatique, permettant d'accéder à toutes les fonctionnalités du serveur 24.

Le serveur 24 est un serveur éphémère, généré sur requête. Ce serveur 24 exécute un système d'exploitation non modifiable ou immutable, comme par exemple MicroOS sur Linux.

Le serveur 24 comporte également des modules 26, 28 comportant des outils logiciels, par exemple des outils de débogage (de l'anglais «debugging ») de code logiciel permettant à chacun des opérateurs 8, 10 d'effectuer des actions de support sur la machine virtuelle (VM) 6.

Le serveur 24 est configuré pour envoyer des commandes à la machine virtuelle 6, par exemple en utilisant un protocole de communication sécurisé tel qu'un protocole SSH (pour « secure shell »), et des commandes pour mettre en oeuvre un ou plusieurs services30.

Des exemples de commandes passées dans ce cadre sont des commandes qui permettent d'afficher l'état de la machine virtuelle/du container ou modifier l'état de la machine virtuelle/du container pour en modifier le comportement (par exemple, en corriger le comportement défectueux)

Les modules 16, 18, 20 et 22 coopèrent, comme décrit plus en détail ci-après, pour mettre en oeuvre un procédé de fourniture d'accès encadré d'au moins un opérateur externe à un ensemble d'opérations fournies par une infrastructure de calcul distante à un client.

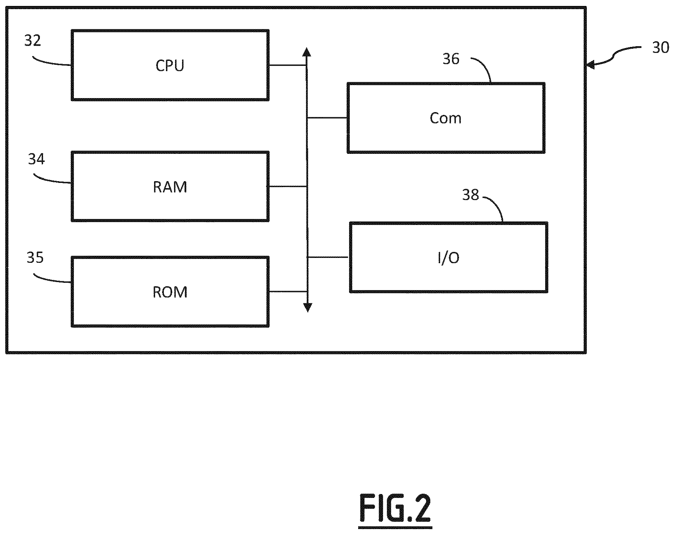

Les modules 16, 18, 20, 22 sont par exemple réalisés sous forme d'instructions logicielles formant un ou plusieurs programmes d'ordinateur, exécutables par un dispositif électronique programmable tel un ordinateur, tel que représenté schématiquement à la figure 2.

Le dispositif électronique programmable 30 comporte au moins un processeur de calcul 32, une unité de mémoire électronique 34 de type RAM, une unité de mémoire 35 non-transitoire, une interface 36 de communication avec des dispositifs distants, par un protocole de communication choisi, par exemple un protocole filaire et/ou un protocole de communication radio, et une interface 38 d'entrées/sorties, permettant des saisies/réceptions de commandes et affichages de résultats. Les éléments du dispositif 30 sont adaptés à communiquer via un bus de communication.

Le processeur de calcul 32 est configuré pour mettre en oeuvre le module 16 d'authentification, le module 18 de gestion de session informatique partagée et le module 20 mettant en oeuvre une passerelle d'accès à un service de terminal distant, le service de terminal distant 22 étant mis en oeuvre par un autre dispositif électronique programmable.

Dans un mode de réalisation, les modules 16, 18, 20, et le module 22, réalisés sous forme d'instructions logicielles, forment un programme d'ordinateur, qui, lorsqu'il est exécuté par un dispositif électronique programmable, met en oeuvre un procédé de fourniture d'accès encadré selon l'invention. Ces instructions logicielles sont en outre aptes à être enregistrées sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

En variante non représentée, les modules 16, 18, 20 et 22 sont réalisés chacun sous forme de composants logiques programmables, tels que des FPGA (de l'anglais *Field Programmable Gate Array*), des microprocesseurs, des composants GPGPU (de l'anglais *General-purposeprocessing on graphies processing*), ou encore de circuits intégrés dédiés, tels que des ASIC (de l'anglais *Application Spécifie Integrated Circuit*).

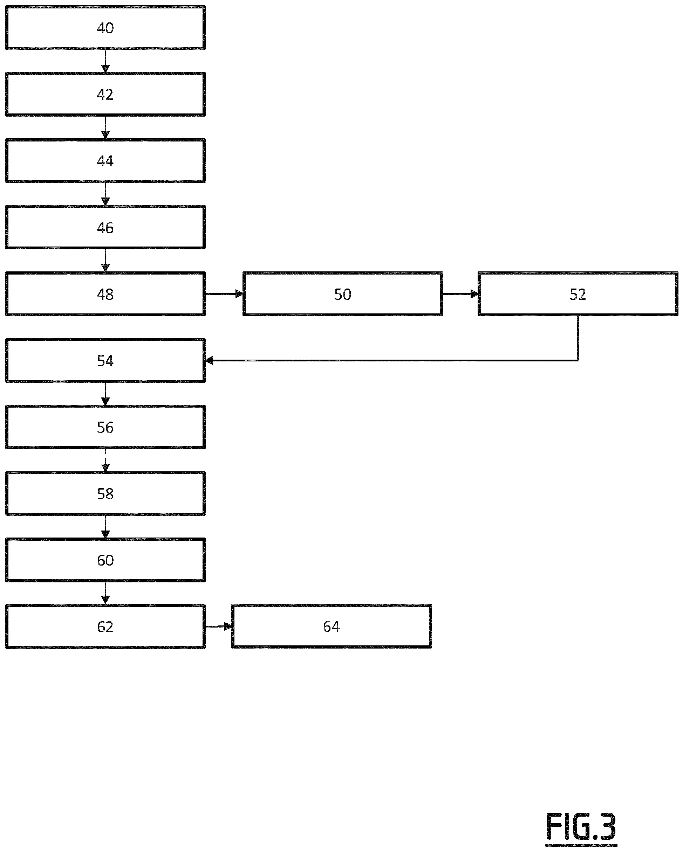

La figure 3 est un organigramme des principales étapes d'un procédé d'accès encadré d'au moins un opérateur externe à un ensemble d'opérations fournies par une infrastructure de calcul distante à un client, selon un mode de réalisation.

Ce procédé comprend la réception 40 par le module 18 de gestion de session informatique partagée, d'une requête de mise en place d'une session informatique partagée avec l'opérateur externe, en provenance de l'opérateur de confiance.

Le procédé comprend ensuite, de préférence, une étape 42 d'authentification de d'autorisation, consistant à vérifier l'identité du requérant (opérateur de confiance) avant d'autoriser son accès. Cette étape est par exemple effectuée le module d'authentification 16. La mise en oeuvre d'une authentification permet d'augmenter la fiabilité du système. Tout mécanisme d'authentification connu, par exemple par mot de passe, peut être mis en oeuvre.

Le procédé comprend ensuite une étape 44 d'instanciation (i.e création et mise en état de marche) d'un serveur exécutant un système d'exploitation qui est de préférence un système d'exploitation non modifiable et d'un service de terminal de connexion à ce serveur, le serveur étant configuré pour accéder à ensemble d'opérations fournies par ladite infrastructure de calcul distante audit client (par exemple, via la VM 6)

Par exemple, le service de terminal est réalisé par la mise en oeuvre du protocole RDP (pour Remote Desktop Server).

De plus, lors de la mise en place 44 d'un tel serveur, des modules 26, 28 comportant des outils logiciels, par exemple des outils de débogage (de l'anglais «debugging ») de code logiciel sont également installés sur ce serveur.

Ces outils logiciels sont par exemple prévus pour une maintenance à effectuer sur l'ensemble d'opérations fournies par une infrastructure de calcul distante au client.

Suite à une instanciation réussie, le procédé comporte en outre une étape 46 de génération d'une passerelle d'accès au service de terminal distant. Par exemple, si le service de terminal par le protocole RDP, la passerelle d'accès générée à l'étape 46 est un client RDP.

Ensuite, le procédé comporte l'obtention 48, via cette passerelle d'accès, d'une adresse réseau du service de terminal distant, cette adresse réseau étant fournie à l'opérateur de confiance 10.

Par exemple, l'adresse réseau est une adresse web ou URL (pour « Uniform Resource Locator »).

Par la suite, l'opérateur de confiance a la possibilité d'accéder au service de terminal distant grâce à cette adresse réseau, en passant par la passerelle d'accès mise en place.

L'adresse réseau du service de terminal distant est également fournie (étape 50) à l'opérateur externe 8, par exemple par l'opérateur de confiance 10.

L'opérateur externe envoie (étape 52) une requête d'accès au service de terminal distant, en utilisant l'adresse réseau du service de terminal distant reçu. Par exemple, l'opérateur externe se connecte à la passerelle d'accès.

Le procédé comporte ensuite, de préférence, une étape 54 d'authentification et d'autorisation de l'opérateur externe, analogue à l'étape 42 décrite ci-dessus. Tout mécanisme d'authentification connu, par exemple par mot de passe, peut être mis en oeuvre. Avantageusement, afin de garantir la sécurité, seul un opérateur externe explicitement déclaré, par exemple par un opérateur de confiance, est ainsi autorisé à se connecter dans le système.

Si l'authentification de l'opérateur externe est validée, l'accès de cet opérateur externe au service de terminal distant est autorisé (étape 56).

Ainsi, un accès partagé au serveur via le service de terminal distant est mis accordé.

Cet accès est encadré, toute action de l'opérateur externe pouvant être contrôlée par l'opérateur de confiance.

Une mise en oeuvre d'actions de corrections/maintenance/débogage etc sur la VM 6 du client s'ensuit. Par exemple, ces actions comprennent des actions d'affichage d'état de la VM 6 (pour, par exemple du débogage ou de la supervision), de modification d'état (pour, par exemple, de la correction ou de la maintenance).

Le procédé de fourniture d'accès encadré comprend ensuite une étape 58 de réception d'une requête d'arrêt de ladite session informatique partagée en provenance dudit opérateur de confiance.

Cette requête est suivie d'une déconnexion 60 de l'opérateur de confiance et de l'opérateur externe du service de terminal.

Un archivage 62, dans une unité de mémoire électronique, de l'ensemble des actions effectuées par l'opérateur externe et l'opérateur de confiance, est ensuite effectué. Ainsi, toutes les actions effectuées durant la session informatique partagée sont mémorisées, pour une éventuelle inspection ultérieure. Ainsi, la sécurité globale du système est encore augmentée.

Enfin, le procédé comprend un arrêt 64 de l'exécution du service de terminal sur le serveur par le module 20.

Ainsi, le terminal distant permettant l'accès au serveur distant est éphémère, ce qui permet encore d'augmenter la sécurité en évitant toute possibilité de reconnexion ultérieure par un tiers malveillant qui aurait récupéré des informations (adresse réseau, identifiants, mots de passe) lui permettant d'endosser l'identité d'un des opérateurs autorisés.

L'invention a été décrite ci-dessus pour l'accès encadré à un opérateur externe, mais il est entendu qu'il est possible de l'appliquer, de manière analogue, pour l'accès encadré d'une pluralité d'opérateurs externes distincts.

## Revendications

1. Procédé d'accès encadré d'au moins un opérateur externe à un ensemble d'opérations fournies par une infrastructure de calcul distante à un client, via un réseau de communications, le procédé étant **caractérisé en ce qu'**il est mis en oeuvre par au moins un processeur de calcul d'un système d'accès encadré opéré par un opérateur de confiance, différent dudit opérateur externe, l'opérateur de confiance ayant un niveau de droits d'accès supérieur au niveau de droits d'accès dudit opérateur externe, et comprend des étapes de :
- réception (40) d'une requête dudit opérateur de confiance (10) de mise en place d'une session informatique partagée avec l'opérateur externe (8),
- instanciation (44) d'un serveur exécutant un système d'exploitation, implémentant un service de terminal de connexion à distance audit serveur, ledit serveur étant configuré pour accéder audit ensemble d'opérations fournies par ladite infrastructure de calcul distante audit client,
- génération (46) d'une passerelle d'accès audit service de terminal,
- fourniture (48-56) d'accès audit service de terminal, via ladite passerelle d'accès, à l'opérateur de confiance et à l'opérateur externe ;
- suite à une réception (58) d'une requête d'arrêt de ladite session informatique partagée en provenance dudit opérateur de confiance, déconnexion (60) dudit opérateur de confiance et dudit opérateur externe du service de terminal, et
- arrêt (64) de l'exécution du service de terminal sur ledit serveur.

2. Procédé selon la revendication 1, dans lequel l'étape de fourniture d'accès audit service de terminal comporte la transmission (48) d'une adresse de connexion à l'opérateur de confiance.

3. Procédé selon l'une des revendications 1 ou 2, comportant, suite à la réception (40) d'une requête dudit opérateur de confiance de mise en place d'une session informatique partagée, une étape (42) d'authentification dudit opérateur de confiance et d'autorisation d'accès suite à ladite authentification.

4. Procédé selon la revendication 1 à 3, dans lequel l'étape de fourniture (48-56) d'accès audit service de terminal comporte une authentification (54) de l'opérateur externe, la fourniture d'accès audit opérateur externe étant conditionnée à la réussite de l'authentification.

5. Procédé selon l'une quelconque des revendications 1 à 3, comportant en outre, suite à la réception (58) de la requête d'arrêt de ladite session informatique partagée, un archivage (62) de l'ensemble des actions effectuées par l'opérateur externe et l'opérateur de confiance durant ladite session.

6. Procédé selon l'une quelconque des revendications 1 à 5, dans lequel à l'étape d'instanciation, le système d'exploitation exécuté par ledit serveur est un système d'exploitation non modifiable.

7. Programme d'ordinateur comportant des instructions logicielles qui, lorsqu'elles sont exécutées par un dispositif électronique programmable, mettent en oeuvre un procédé conforme aux revendications 1 à 6.

8. Système d'accès encadré d'au moins un opérateur externe à un ensemble d'opérations fournies par une infrastructure de calcul distante à un client, via un réseau de communications, le système d'accès encadré étant opéré par un opérateur de confiance, différent dudit opérateur externe, l'opérateur de confiance ayant un niveau de droits d'accès supérieur au niveau de droits d'accès dudit opérateur externe, et le système comprenant au moins un processeur configuré mettre en oeuvre des modules de:
- réception d'une requête dudit opérateur de confiance (10) de mise en place d'une session informatique partagée avec l'opérateur externe (8),
- instanciation d'un serveur (24) exécutant un système d'exploitation, implémentant un service de terminal de connexion à distance audit serveur, ledit serveur étant configuré pour accéder audit ensemble d'opérations fournies par ladite infrastructure de calcul distante audit client,
- génération d'une passerelle d'accès (20) audit service de terminal,
- fourniture d'accès audit service de terminal, via ladite passerelle d'accès (20), à l'opérateur de confiance et à l'opérateur externe ;
- suite à une réception d'une requête d'arrêt de ladite session informatique partagée en provenance dudit opérateur de confiance, déconnexion dudit opérateur de confiance (10) et dudit opérateur externe (8) du service de terminal, et
- arrêt de l'exécution du service de terminal sur ledit serveur.

9. Système selon la revendication 8, comportant en outre un module d'authentification (16), configuré pour authentifier ledit opérateur de confiance et/ou ledit au moins un opérateur externe.

10. Système selon la revendication 8 ou 9, comportant en outre des modules de connexion sécurisés par réseau virtuel privé, pour la connexion de l'opérateur de confiance et pour la connexion dudit au moins un opérateur externe.
